(19) Europäisches Patentamt
European Patent Office
Office européen des brevets

(11) Veröffentlichungsnummer: **0 491 235 A2**

(12) # EUROPÄISCHE PATENTANMELDUNG

(21) Anmeldenummer: **91120813.0**

(51) Int. Cl.5: **G01N 21/41**

(22) Anmeldetag: **04.12.91**

(30) Priorität: **18.12.90 DE 4040462**

(43) Veröffentlichungstag der Anmeldung: **24.06.92 Patentblatt 92/26**

(84) Benannte Vertragsstaaten: **DE FR GB IT NL SE**

(71) Anmelder: **BASF Aktiengesellschaft**
**Carl-Bosch-Strasse 38**
**W-6700 Ludwigshafen(DE)**

(72) Erfinder: **Wu, Chi, Dr.**
**An der Froschlache 7**
**W-6700 Ludwigshafen(DE)**
Erfinder: **Wiese, Harm, Dr.**
**Zaehringerstrasse 50**
**W-6900 Heidelberg(DE)**

(54) **Faseroptisches Differentialrefraktometer (FODR).**

(57) In einem neuartigen faseroptischen Differentialrefraktometer (FODR) für die Messung des Brechzahlinkrements Dn oder der Konzentrationsdifferenz DC wird Licht aus einer Lichtquelle 1 in das Tor I eines faseroptischen Richtkopplers 2 eingekoppelt und dann durch den Richtkoppler 2 in ein Tor II geleitet. Am Ende von Tor II wird das Licht durch eine Linse 3 kollimiert. Das kollimierte Licht wird weiter durch eine geteilte Refraktometerküvette 4 geleitet und durch einen Spiegel 5 zurückreflektiert. Das reflektierte Licht wird nochmals durch die geteilte Refraktometerküvette 4 geleitet. Bei jedem Durchlauf durch die Refraktometerküvette 4 wird das Licht gebrochen, wenn die Lösungen in den zwei Abteilungen der geteilten Refraktometerküvette 4 unterschiedliche Brechzahlen haben. Deshalb kann nur ein Bruchteil des reflektierten Lichtes von der Linse 3 in das Tor II fokussiert werden, der seinerseits eine Funktion des Ausmaßes der Brechung ist. Das von Tor II aufgenommene Licht wird vom Richtkoppler 2 zum Photodetektor 6 weitergeleitet.

FIG. 1

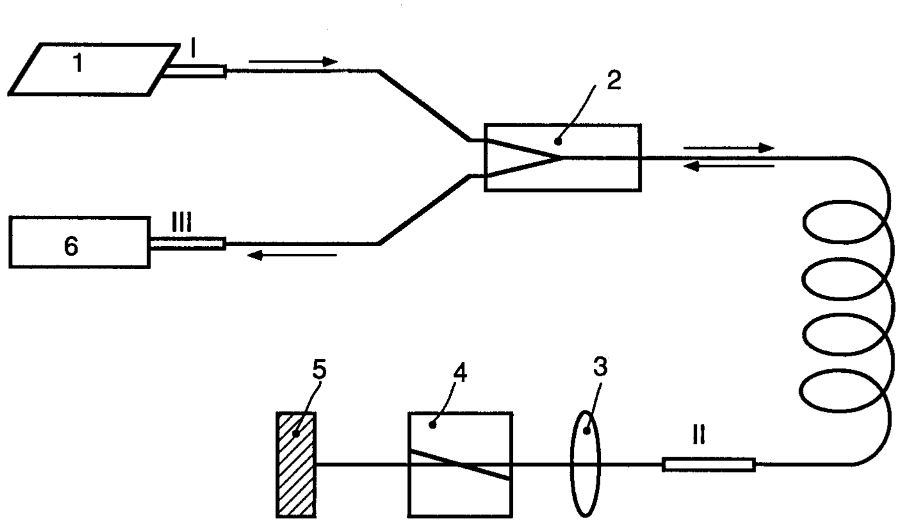


EP 0 491 235 A2

Die vorliegende Erfindung bezieht sich auf ein Refraktometer zur Messung des Brechzahlinkrements (Dn) oder der Konzentrationsdifferenz (DC) zwischen Lösungen.

Ein Refraktometer kann grundsätzlich für zwei Zwecke verwendet werden. Einer ist die Messung des spezifischen Brechzahlinkrements einer Lösung m, das definiert ist als

$$\lim_{C \to 0} \left[ \frac{n - n_0}{C} \right]_{T,\ p,\ k_0}$$

oder genauer als

$$\lim_{C \to 0} \left[ \frac{\delta n}{\delta C} \right]_{T,\ p,\ k_0}$$

wobei n und $n_0$ die Brechzahl der Lösung bzw. des Lösungsmittels und C (g/ml) die Konzentration des gelösten Stoffes im Lösungsmittel ist. Der andere Zweck ist die Verwendung als Online-RI-Detektor in der Chromatographie, wie beispielsweise HPLC und GPC/SEC, wo eine relative Konzentration einer eluierten Lösung gemessen wird. Das Profil der gegen das Elutionsvolumen aufgetragenen Konzentration charakterisiert die Molekulargewichtsverteilung, die Größenverteilung usw.

Es sind im wesentlichen zwei Arten von Brechzahlinkrementsmessungen in allgemeiner Verwendung:

(i) Differentialrefraktometrie:

Sie hängt von der Brechung des Lichts an der Grenze zwischen der Probe und einem Vergleichsmedium ab. Üblicherweise wird die Strahlverschiebung direkt gemessen und dann durch Multiplikation mit einer kalibrierten Konstanten, die unter Verwendung von Lösungen mit genau bekannten Brechzahldifferenzen Dn erhalten werden können, in das Brechzahlinkrement umgerechnet. Zur direkten Messung der Verschiebung muß der Abstand zwischen Detektor und Probe genügend groß sein, da Dn gewöhnlich sehr klein ist. Deshalb hat diese Art von Refraktometer in der Regel eine Länge von ca. 1 m.

(ii) Interferometrie:

Kohärentes Licht wird in zwei Lichtstrahlen mit identischen geometrischen Wegen geteilt, die zwei unterschiedliche Lichtwege durchlaufen. Der eine geht durch die Probe, der andere durch das Vergleichsmedium. Diese Methode beruht auf der Bildung von Interferenzen bei der Wiedervereinigung der beiden Strahlen.

Die meisten handelsüblichen Refraktometer, mit einem Nachweisbereich von Dn = ±0,01, haben eine Empfindlichkeit von ~ $2 \times 10^{-7}$ RI-Einheiten, sie ist also nicht besser als 1 Teil in $10^5$. Bei den meisten Polymeren liegt der Wert von m um 0,1. Deshalb beträgt die geringste nachweisbare Polymerkonzentration etwa $10^{-6}$ g/ml. Einige interferometrisch arbeitende Refraktometer haben eine höhere Empfindlichkeit (bis zu $10^{-9}$ RI-Einheiten). Bei einem Differentialrefraktometer kann die Empfindlichkeit durch Erhöhung der Entfernung zwischen Probe und Detektor erhöht werden. Hierfür gibt es jedoch aus Platzgründen praktische Grenzen. Bei einem Interferometer läßt sich die Empfindlichkeit durch die Erhöhung der Länge der Probenzelle verbessern, wodurch das benötigte Probenvolumen erhöht und der Meßbereich von Dn bzw. DC vermindert wird. Es sei auch bemerkt, daß die gegenwärtigen handelsüblichen Refraktometer nicht leicht als ein Teil in ein Lichtstreuungsspektrometer integriert oder als Fernmeßgerät verwendet werden können, was aber in der Praxis erforderlich ist.

Aufgabe der vorliegenden Erfindung ist es, ein Refraktometer mit höherer Empfindlichkeit, einem größeren Meßbereich und einem kleineren erforderlichen Probenvolumen, einer zum Tragen geeigneten Größe und der Eignung zur Fernmessung zu bauen. Einerseits soll es als sehr empfindlicher Online-RI-Detektor für die Chromatographie verwendet werden können. Andererseits soll es als Offline-Differentialrefraktometer zur Messung des spezifischen Brechzahlinkrements verwendet werden können.

Diese Aufgabe wird erfindungsgemäß durch die Merkmale der Patentansprüche gelöst. Bei der Erfindung wird Licht aus einer Lichtquelle in das Tor I eines faseroptischen Richtkopplers eingekoppelt und in ein Tor II gelenkt. Am Ende von Tor II wird das Licht ausgestrahlt. Das ausgestrahlte Licht wird dann von einer Linse kollimiert. Das kollimierte Licht durchläuft eine geteilte Refraktometerküvette und wird von einem Spiegel zurückreflektiert. Das reflektierte Licht wird von Tor II aufgenommen und schließlich von dem faseroptischen Richtkoppler über Tor III in einen Photodetektor gelenkt.

Gemäß der Erfindung kann die Konstruktion und die Stabilität des FODRs weiter verbessert werden,

wenn die Lichtquelle und der Photodetektor mit den Lichtleitern über eine bewegliche Anschlußleitung verbunden werden. Sowohl die Linse als auch der Spiegel können als bestimmt Teile der Refraktometerküvette gebaut werden. Die Empfindlichkeit kann auch verbessert werden, wenn zusätzliche Detektoren zur Überwachung der Intensität des einfallenden und des reflektierten Lichts verwendet werden.

Bei Verwendung dieses neuartigen FODRs sollte auf der Grundlage der Analyse des Signal-/Rauschverhältnisses (SNR) das SNR der gemessenen Intensität ~ 84 db betragen, wenn die empfangene optische Leistung am Detektor 10 $\mu$W, die optische Bandbreite 10 kHz und der Lastwiderstand des Detektors 10 k$\Omega$ beträgt. In der Praxis wird üblicherweise die Größenordnung von 10 dB als Spielraum benötigt, was bedeutet, daß die erreichbare Auflösung in der Intensität besser als 1 Teil in $10^7$ ist. Die nachgewiesene Intensität ist proportional zur Brechzahldifferenz Dn. Deshalb ist die Empfindlichkeit in Dn auch besser als ein Teil in $10^7$, d.h. wenn der Nachweisbereich von Dn ~ $10^{-3}$ beträgt, so ist die Empfindlichkeit in Dn ~ $10^{-10}$.

Als chromatographischer Online-RI-Detektor mit dieser Empfindlichkeit und dem Nachweisbereich kann für die meisten Polymerlösungen die Änderung der Konzentration von $10^{-9}$ bis $10^{-2}$ g/ml nachgewiesen werden, ohne daß der instrumentelle Aufbau oder die Küvette gewechselt wird. Außer der höheren Empfindlichkeit und dem größeren Nachweisbereich kann das erforderliche Probenvolumen nur 1 $\mu$l betragen. Das gesamte Refraktometer kann als tragbares Gerät hergestellt werden. Die Bedeutung der Verwendung eines FODRs als chromatographischer Online-Detektor kann nicht überschätzt werden.

Bei Verwendung als Offline-Refraktometer zur Messung von m wäre die Empfindlichkeit von $10^{-8}$ in Dn ausreichend. Deshalb kann der Nachweisbereich von Dn auf $10^{-1}$ RI-Einheiten erhöht werden, womit im Prinzip die m-Messungen aller Polymerlösungen abgedeckt sind, ohne daß, wie in einem herkömmlichen Differenzrefraktometer, die Küvette ausgewechselt werden muß. FODRs können leicht als ein Teil in ein Lichtstreuungsspektrometers eingebaut werden, in dem die Lichtquelle, der Küvettenhalter und der Detektor gemeinsam genutzt werden können.

Durch die Verwendung faseroptischer Komponenten, die herkömmlicherweise in der Nachrichtentechnik verwendet werden, ist der Umgang mit FODRs leicht. Das FODR-Prinzip läßt sich wegen seiner hohen Empfindlichkeit, seiner Eignung zur Fernmessung, seiner zum Tragen geeigneten Größe und seines geringen benötigten Probenvolumen auch auf andere Anwendungen in Forschung und Industrie erweitern. Zusätzlich zu seiner Verwendung als Routinemessung von m in der Laserlichtstreuung und als chromatographischer Detektor kann das FODR als Sensor zur Überwachung der Änderung einer Anzahl physikalischer Parameter wie Temperatur, Druck, Konzentration usw. verwendet werden, solange sie Änderungen der Brechzahl von Stoffen herbeiführen können. Es soll betont werden, daß bei Verwendung als Fernsensoren in industriellen Anwendungen die Sicherheitsaspekte einer FODR-Sonde im Vergleich zu Sonden, die elektrischen Strom verwenden, besonders attraktiv sind.

Im folgenden werden zwei Beispiele für die Erfindung veranschaulicht und beschrieben.

Fig. 1 zeigt ein faseroptisches Differenzfraktometer.

Fig. 2 zeigt eine modifizierte und integrierte Ausführung eines faseroptischen Differenzrefraktometers.

Fig. 3 zeigt die gemessene Intensität als Funktion der Brechzahldifferenz Dn.

Fig. 4 zeigt die gemessene Intensität als Funktion der Konzentration C für Polystyrol in THF.

Fig. 1 zeigt, daß das Licht von einer Lichtquelle 1 in das Tor I eines faseroptischen Richtkopplers 2 eingekoppelt wird. Das Licht wird durch den Richtkoppler 2 in Tor II gelenkt. Ferner wird das Licht am Ende von Tor II ausgestrahlt und von einer Linse 3 kollimiert. Das kollimierte Licht geht durch eine geteilte Refraktometerküvette 4 und wird dann von einem Spiegel 5 zurückreflektiert. Das reflektierte Licht durchläuft die Refraktometerküvette 4 nochmals. Jedesmal, wenn es die Refraktometerküvette 4 durchläuft, wird das Licht gebrochen, wenn die Lösungen in den zwei Abteilungen der Refraktometerküvette 4 unterschiedliche Brechzahlen haben. Deshalb kann nach zweimaliger Brechung nur ein Teil des reflektierten Lichtes von der Linse 3 in Tor II fokussiert werden. Das von Tor II aufgenommene Licht wird vom faseroptischen Richtkoppler über Tor III in einen Photodetektor weitergeleitet.

Auf der Grundlage der geometrischen Optik (Snelliussches Gesetz) und der Trigonometrie kann die Intensität des von Tor II aufgenommenen Lichtes geschrieben werden als

$$1 - \frac{I}{I_0} = \frac{4f\tan(a)}{PR} |Dn| + O(|Dn|^3) \qquad (1)$$

wobei $I_0$ und I die gemessenen Intensitäten sind, wenn die zwei Abteilungen der geteilten Refraktometerküvette 4 beide mit Lösungsmittel, oder eine mit Lösungsmittel und die andere mit Lösung gefüllt ist. f, a und

R sind die Brennweite der Linse 3, der Winkel zwischen dem Teiler und der Küvettenwand bzw. der Durchmesser des Lichtleiterkerns. Mit $O(|Dn|^3)$ wird der gesamte Beitrag höherer Ordnung bezeichnet. Wenn $|Dn| \leqq R/[4f\tan(a)]$, so ist I proportional zu $|Dn|$, da der Beitrag von $O(|Dn|^3)$ weniger als 1 % beträgt. Der gesamte Nachweisbereich von $|Dn|$ ist etwa das Vierfache des Linearitätsbereiches, d.h. $R/[f\tan(a)]$. Es sollte hervorgehoben werden, daß die Änderung der gemessenen Intensität als Funktion der Brechzahldifferenz nur von f abhängt, wenn der Lichtwellenleiter und die Refraktometerküvette vorgegeben sind. Wenn die relative Lage von Tor II und der Linse 3 richtig festgelegt wird, kann das gesamte Instrument äußerst stabil sein, und es braucht nur einmal kalibriert zu werden. Werden R ~ 2 $\mu$m, f ~ 2 mm und tan(a) ~ 2,5 gewählt, so wären der Linearitätsbereich von $|Dn|$, der gesamte Nachweisbereich von $|Dn|$ und die erreichbare Empfindlichkeit in der Brechzahl ~ $10^{-4}$, ~ $4x10^{-4}$ bzw. ~$10^{-11}$ RI-Einheiten. Es sollte darauf hingewiesen werden, daß die Effekte wie Quellenrauschen, Bauteildrift, Temperaturschwankungen usw. in der obigen Erörterung vernachlässigt sind, da sie alle kompensiert oder begrenzt werden können.

Fig. 2 zeigt eine integrierte Ausführung des FODRs in Fig. 1. Sowohl die Linse 3 als auch der Spiegel 5 sind als ein Teil der Refraktometerküvette 4 gebaut. Auf diese Art werden sowohl die Drift der Linse als auch die des Spiegels begrenzt. Tor II und die Küvette 4 könnten innerhalb eines massiven Stücks rostfreien Stahls 7 ausgerichtet und eingebettet werden. Die Temperatur des gesamten Blocks kann präzise geregelt werden. Zwei zusätzliche Photodioden 8 und 9 können zur Messung der einfallenden und der reflektierten Intensität eingeführt werden, um sie zur Korrektur der Intensitätsschwankungen der Lichtquelle zu verwenden zu können. Eine Leuchtdiode und eine Photodiode (in Figur 2 nicht gezeigt) kann als Lichtquelle bzw. Detektor an Tor I bzw. Tor II durch einen beweglichen Anschlußleiter angeschlossen werden.

Fig. 3 zeigt, wie sich die gemessene Intensität mit der Brechzahldifferenz [Dn] von sowohl wäßriger KCl-Lösung (hohle Quadrate) als auch von NaCl (die hohlen Kreise) ändert. Die Konzentrationen wurden unter Verwendung der folgenden gut bestätigten Beziehungen in Dn umgerechnet:
$Dn = 1{,}371 \times 10^{-3}C$ (Aq. KCl) und $Dn = 1{,}766 \times 10^{-3}C$ (Aq. NaCl), wobei C in der Einheit g Salz/100 g Wasser gemessen ist. Wie vorausgesagt, ist das Verhältnis der gemessenen Intensität proportional zur Brechzahldifferenz, wenn n klein ist.

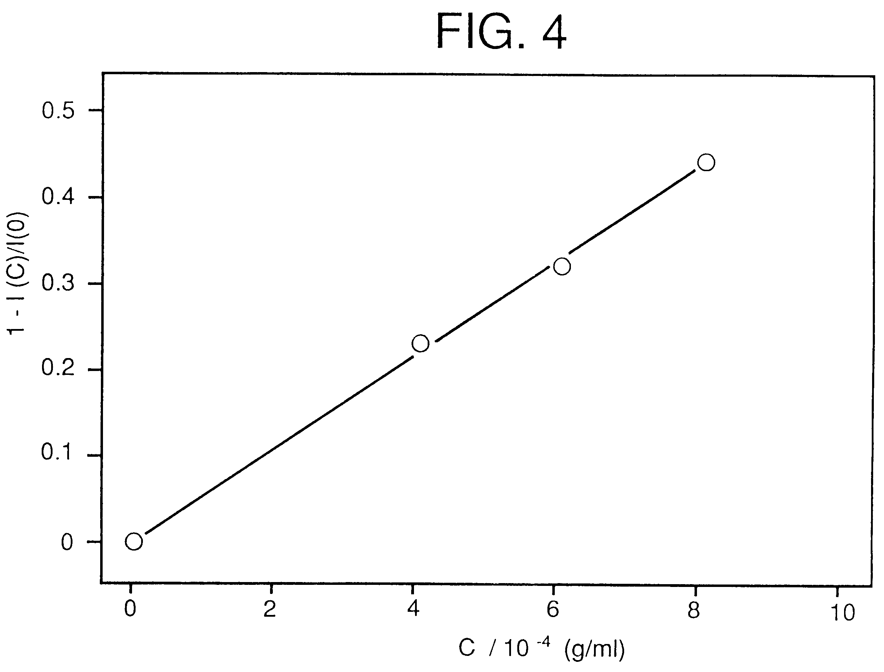

Fig. 4 zeigt, wie sich die gemessene Intensität mit der Konzentration C von Lösungen von Polystyrol in THF ändert. Die gemessene Intensität ist innerhalb des experimentellen Bereiches proportional zur Konzentration. Die Steigung der Gerade kann ferner dazu verwendet werden, das spezifische Brechzahlinkrement m mit einer bekannten Kalibrierungskonstanten zu berechnen.

## Patentansprüche

1. Faseroptisches Differentialrefraktometer (FODR) zur Messung des Brechzahlinkrements, gekennzeichnet durch folgende Merkmale:
   (a) einen faseroptischen Richtkoppler (2), der so angeordnet ist, daß er Licht von einer Lichtquelle empfängt, das Licht überträgt und das reflektierte Licht in einen Photodetektor (6) lenkt;
   (b) eine faseroptische Sonde, die mit einer Linse (3) gekoppelt ist und so angeordnet ist, daß sie das Licht sendet und das reflektierte Licht empfängt;
   (c) eine Linse, die so angeordnet ist, daß sie das ausgestrahlte Licht kollimiert und das reflektierte Licht in die faseroptische Sonde fokussiert;
   (d) eine geteilte Refraktometerküvette (4), die so angeordnet ist, daß sie das ausgestrahlte und das reflektierte Licht bricht;
   (e) einen Spiegel (5), der so angeordnet ist, daß er das ausgestrahlte Licht zurückreflektiert, nachdem das ausgestrahlte Licht durch die Küvette (1) gelaufen ist.

2. Faseroptisches Differentialrefraktometer (FODR) gemäß Anspruch 1, gekennzeichnet durch folgende Merkmale:
   (a) eine Lichtquelle und ein Detektor (6) sind direkt an die optische Faser durch bewegliche Anschlußleiter angeschlossen;
   (b) eine mit der Linse (3) und dem Spiegel (6) integrierte Refraktometerküvette (1);
   (c) einen eingebauten Thermostat (7) mit faseroptischer Sonde der integrierten Refraktometerküvette (7) und zwei Photodioden (8,9).

3. Faseroptisches Differentialrefraktometer (FODR) gemäß Anspruch 1 und 2, das als Online-RI-Detektor für die Chromatographie, wie HPLC und GPC/SEC, verwendet wird, worin eine Durchfluß-Refraktometerküvette (7) mit sehr geringem darin verweilenden Probenvolumen verwendet wird.

4. Faseroptisches Differentialrefraktometer (FODR) gemäß Anspruch 1, worin der Teil der optischen Sonde als Fernsensor verwendet werden kann, um Änderungen einer Anzahl physikalischer Parameter wie Temperatur, Druck, Konzentration usw. zu messen, solange sie zu Veränderungen in der Brechzahl von Stoffen führen.

5. Faseroptisches Differentialrefraktometer (FODR) gemäß Anspruch 1, das in ein Lichtstreuungsspektrometer eingebaut ist, worin die Lichtquelle, der Küvettenhalter (4) und der Detektor (6) gemeinsam genutzt werden.

6. Verfahren zur Messung der Brechzahldifferenz oder der Konzentrationsdifferenz zwischen Lösungen, gekennzeichnet durch folgende Verfahrensschritte:
   a) Passieren eines Lichtstrahls durch einen faseroptischen Richtungskoppler (2), der Licht von einer faseroptischen Sonde (II) ausstrahlt, Kollimierung des ausgestrahlten Lichtes mit einer Linse (3) und Brechung des kollimierten Lichtes mit einer geteilten Refraktometerküvette (4),
   b) Rückreflexion des gebrochenen Lichts mit einem Spiegel (5), Fokussierung des gebrochenen Lichts durch dieselbe Linse (3) in dieselbe faseroptische Sonde (II) und Lenkung des reflektierten Lichtes in einen Photodetektor (6) durch denselben Richtungskoppler (2),
   c) Messung der von der faseroptischen Sonde (II) aufgenommenen Lichtintensität als Funktion des Ausmaßes der Brechung.

FIG. 1

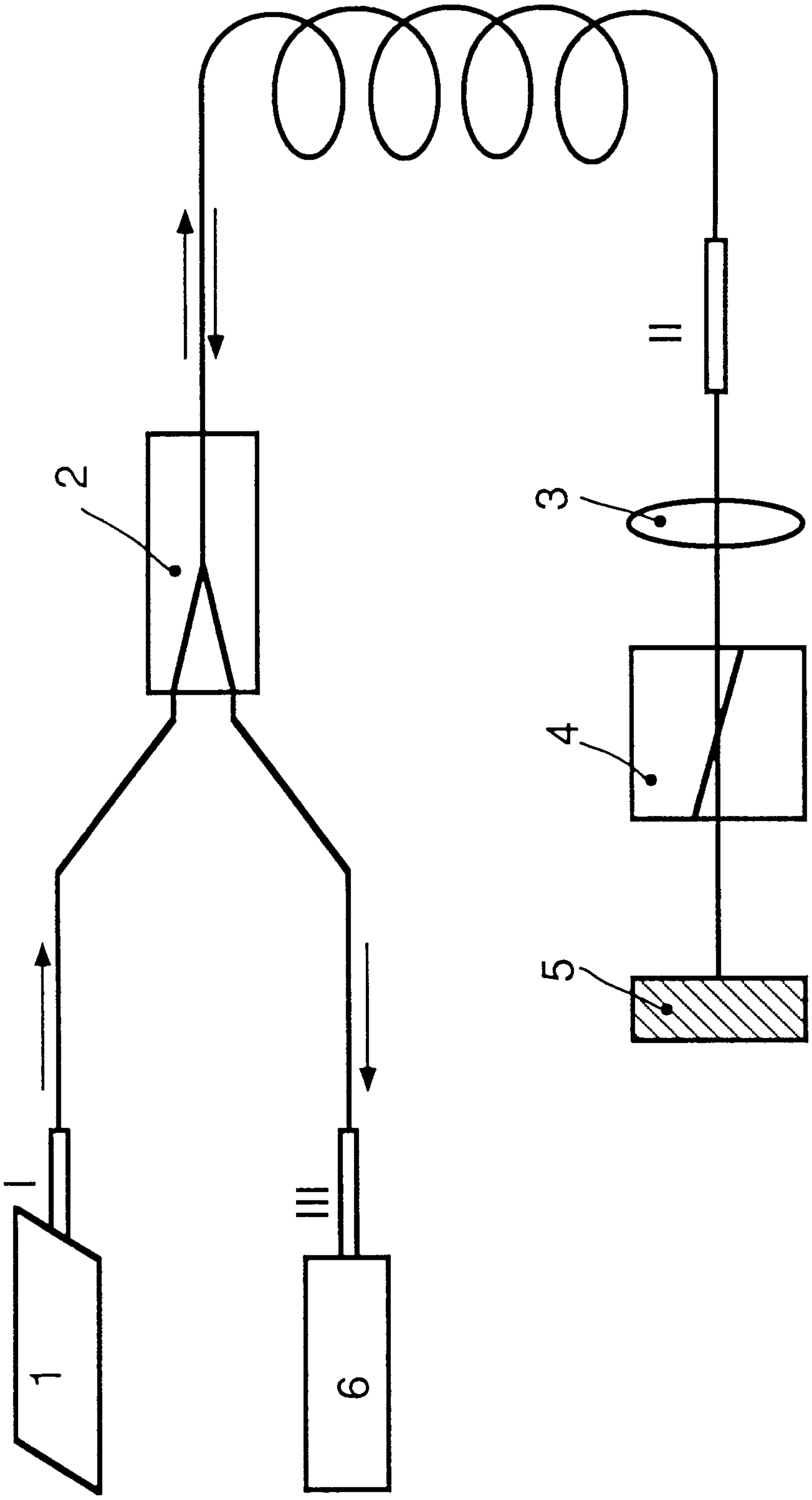

FIG. 2

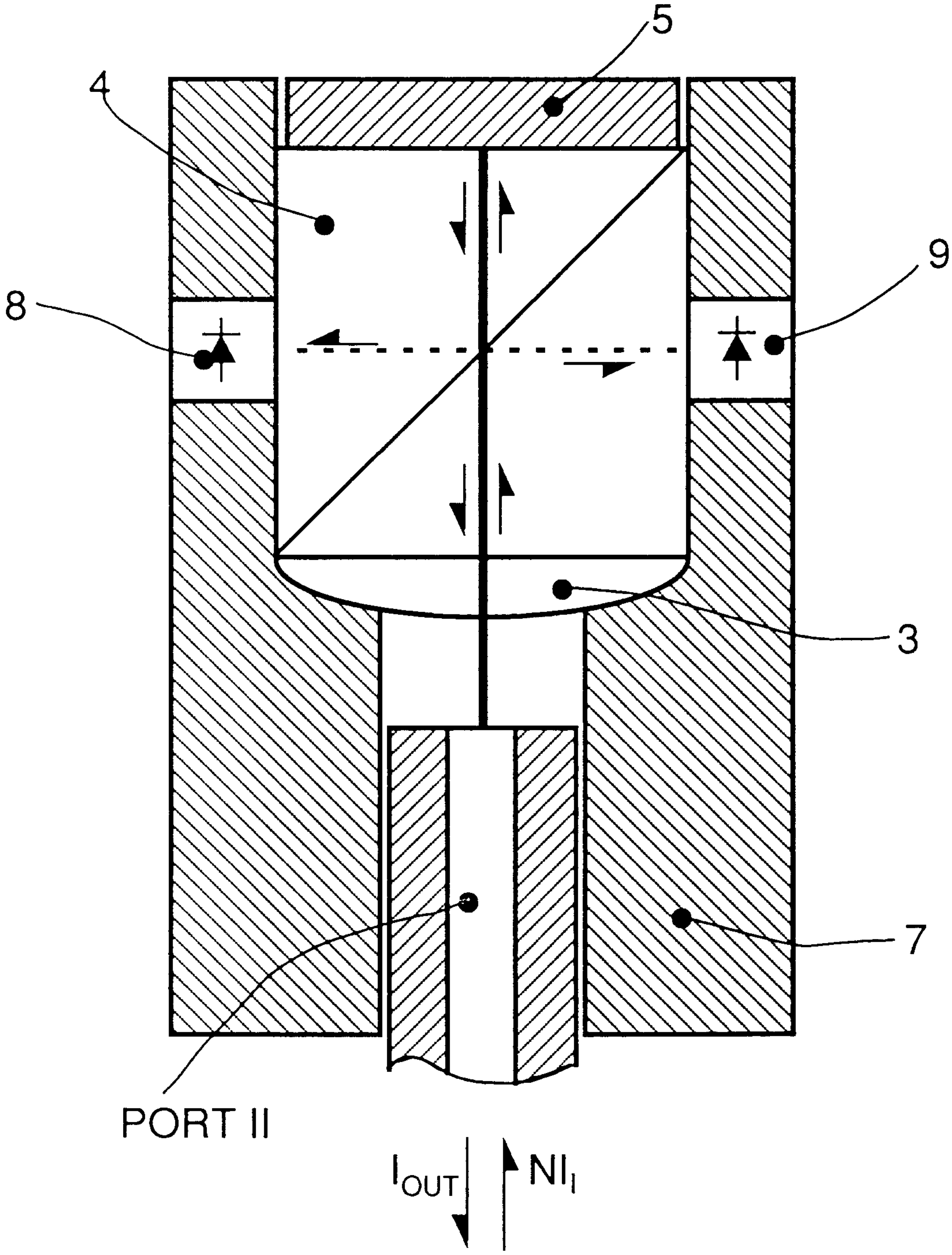

FIG. 3

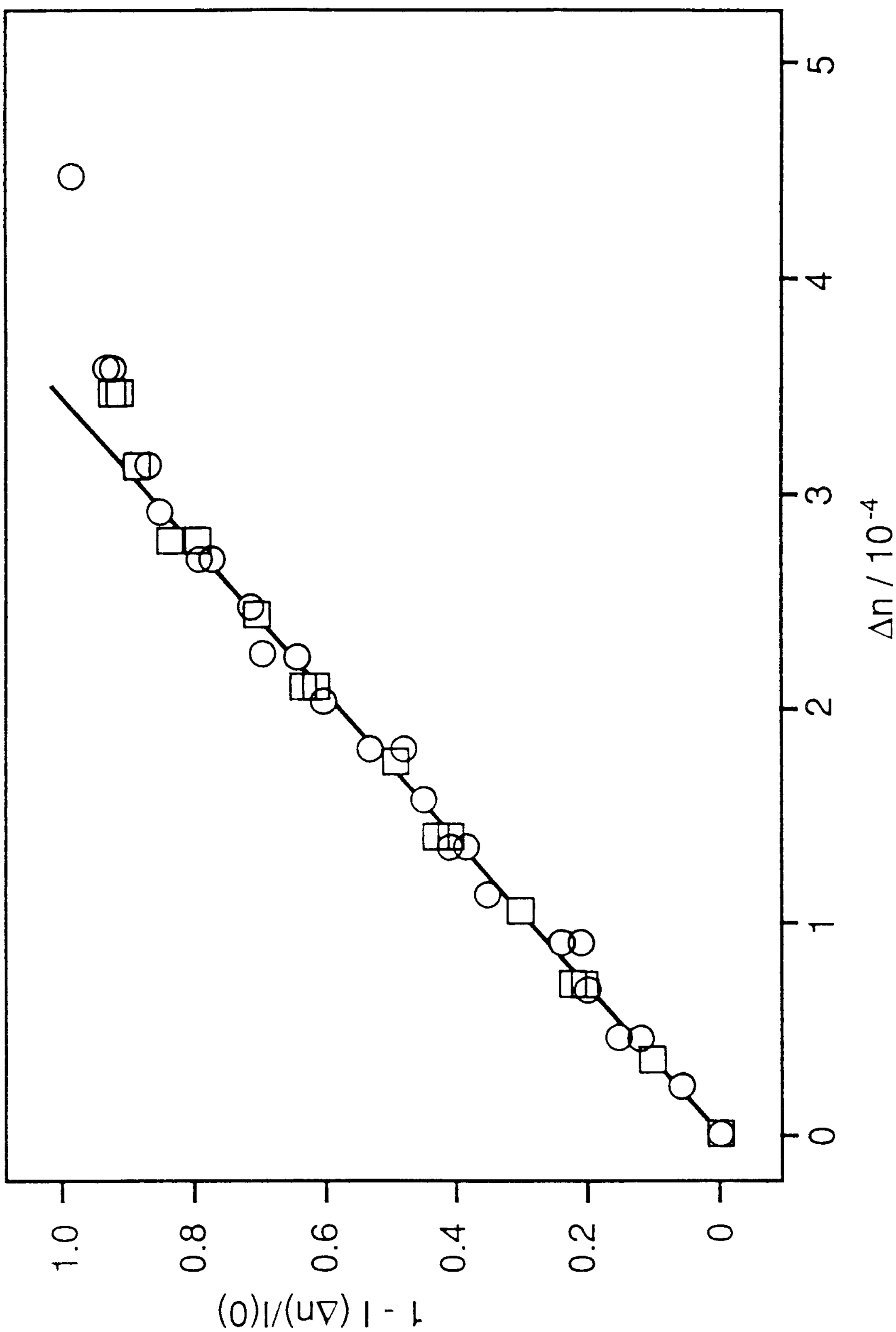

FIG. 4